# EUROPÄISCHE PATENTSCHRIFT

(11) **EP 0 845 113 B1**
(45) Veröffentlichungstag und Bekanntmachung des Hinweises auf die Patenterteilung: **10.11.1999**
(21) Anmeldenummer: 96938911.3
(22) Anmeldetag: 19.08.1996
(51) Int. Cl.: G02B 23/24

(54) **ENDOSKOP MIT VARIABLER VERGRÖSSERUNG**
ENDOSCOPE WITH VARIABLE MAGNIFICATION
ENDOSCOPE A GROSSISSEMENT VARIABLE

(30) Priorität: 18.08.1995 DE 19530477
(43) Veröffentlichungstag der Anmeldung: 03.06.1998
(73) Patentinhaber: Karl Storz GmbH & Co., 78532 Tuttlingen (DE)
(72) Erfinder: RUDISCHHAUSER, Jürgen, D-78532 Tuttlingen (DE); LEDERER, Frank, D-78532 Tuttlingen (DE); DAHMEN, Jan, D-78606 Seitingen (DE)
(74) Vertreter: Münich, Wilhelm, Dr.
(86) Internationale Anmeldenummer: DE9601529
(87) Internationale Veröffentlichungsnummer: WO9707422

(56) Entgegenhaltungen:
- FR-A- 2 648 920
- GB-A- 2 267 762
- US-A- 3 257 902
- US-A- 4 076 018
- US-A- 4 666 262
- PATENT ABSTRACTS OF JAPAN vol. 007, no. 164 (P-211), 19.Juli 1958 & JP 58 072119 A (OLYMPUS KOGAKU KOGYO KK), 30.April 1983,

## Beschreibung

Die Erfindung bezieht sich auf ein Endoskop mit variabler Vergrößerung.

Derartige Endoskope werden für medizinische und technische Anwendungen eingesetzt.

Ein Endoskop mit variabler Vergrößerung, das dem Gegenstand des Anspruchs 1 am nächsten kommt, ist aus der US-PS 4 666 262 bekannt.

Dieses Endoskop weist ein am distalen Ende angebrachtes Endoskopobjektiv, einen Bildweiterleiter, der das Bild des Endoskopobjektivs zum proximalen Ende überträgt und ein Okular auf, durch das das vom Bildweiterleiter übertragene Bild betrachtet wird. Das Okular ist ein aus mehreren Gruppen bestehendes Zweistellungsokular.

Die Einstellung der Vergrößerung des Okularbildes erfolgt durch Verschieben einer Linsengruppe, wobei die zur Einstellung der Vergrößerung nicht verschobenen Linsen des Okulars in einem ersten Tubus gehalten sind, in dem ein weiterer Tubus verschiebbar geführt ist, der die zur Einstellung der Vergrößerung verschobene Linsengruppe hält.

Zur Einstellung der Vergrößerung und der Fokussierung ist ein einziges Einstellrad vorgesehen, das an dem weiteren Tubus angreift, so daß bei einer Drehung des Einstellrades der erste und der weitere Tubus gemeinsam verschoben werden.

Bei diesem bekannten Endoskop ist zwar der mechanische Aufbau vergleichsweise einfach, aufgrund des bei diesem Endoskop gewählten optischen Aufbaus des Okulars ändert sich jedoch die Pupille. Dies ist in einer Reihe von Anwendungsfällen störend.

Ein weiteres Endoskop mit variabler Vergrößerung ist aus der FR-A-2 648 920 bekannt. In dieser Druckschrift ist lediglich der optische Aufbau eines Endoskops mit variabler Vergrößerung beschrieben. Zur Änderung der Vergrößerung des erzeugten Okularbildes werden die beiden Linsengruppen, aus denen das Okular besteht, unterschiedlich verschoben. Die Fokussierung erfolgt durch Verschieben des Okulars als Einheit.

Ein mechanischer Aufbau, mit dem die vergleichsweise komplizierten Bewegungen der einzelnen Linsengruppen realisiert werden können, ist in dieser Druckschrift nicht beschrieben, obwohl es gerade bei einem Endoskop erforderlich ist, die einzelnen Einstellmöglichkeiten mit einem sehr kompakten Aufbau zu realisieren, um das Endoskop im Okularbereich, der für die Handhabung entscheidend ist, nicht zu groß und zu schwer werden zu lassen.

Der Erfindung liegt die Aufgabe zugrunde, ein Endoskop mit variabler Vergrößerung des Okularbildes anzugeben, bei dem keine Änderung der Pupillenlage auftritt, und bei dem die erforderlichen Verschiebungen der Linsen mit einem leichten und kompakten mechanischen Aufbau ausgeführt werden können.

Eine erfindungsgemäße Lösung dieser Aufgabe ist im Patentanspruch 1 angegeben:

Zur Einstellung der Fokussierung ist der weitere Tubus durch eine Rastung in dem ersten Tubus festgelegt, die eine Fokussierung durch Verschieben aller Linsengruppen des Okulars erlaubt. Der Verschiebeweg des ersten Tubus ist beidseits durch jeweils einen Anschlag begrenzt, so daß bei weiterer Drehung des Einstellrades der weitere Tubus aus der einen Vergrößerungs-Stellung in die andere Vergrößerungs-Stellung überführt wird:

Da das Einstellrad an dem weiteren Tubus angreift, werden bei einer Drehung des Einstellrades zunächst der erste und der weitere Tubus gemeinsam verschoben werden. Da der Verschiebeweg des ersten Tubus beidseits durch jeweils den Anschlag begrenzt ist, wird bei einer weiteren Drehung des Einstellrades, d.h. bei einer Drehung "über den Anschlag hinaus", der weitere Tubus aus der einen Vergrößerungs-Stellung in die andere Vergrößerungs-Stellung überführt. Das Einstellrad kann dabei an dem weiteren Tubus über eine Schnecken/Zahnrad-Eingriff oder eine Zahnstangen/Zahnrad-Verbindung angreifen (Anspruch 3).

Die Rastung kann insbesondere durch eine federbelastete Kugel, die in eine von zwei Nuten in dem ersten Tubus eingreift, gebildet werden (Anspruch 2).

Bei der einfachsten Ausgestaltung der Erfindung wird zur Einstellung der Vergrößerung des Okularbildes lediglich eine Linsengruppe verschoben. Zur Verbesserung der Bildqualität ist es allerdings von Vorteil, wenn zwei Linsengruppen verschiebbar ausgestaltet sind (Anspruch 4).

Hierzu ist gemäß Anspruch 5 eine der beiden Linsengruppen in dem weiteren (zweiten) Tubus gehalten, während die andere verschiebbare Linsengruppe in einem dritten Tubus gehalten ist. Der dritte Tubus ist durch eine Feder in Richtung auf den zweiten Tubus vorgespannt, wobei ein Anschlag den Verschiebeweg des dritten Tubus begrenzt.

Da bei der erfindungsgemäße Ausgestaltung die Linsengruppen des Okulars zur Einstellung der Fokussierung insgesamt verschoben werden, ist es gemäß Anspruch 6 besonders vorteilhaft, wenn im Okulartrichter ein Deckglas vorgesehen ist, das bevorzugt in die optische Rechnung der Okularelemente mit einbezogen ist.

Die Erfindung wird nachstehend anhand eines Ausführungsbeispiels unter Bezugnahme auf die Zeichnung näher beschrieben in der zeigen:
- Figur 1: einen Schnitt durch den proximalen Teil eines erfindungsgemäßen Endoskops, und
- Figur 2: die Linsen eines Ausführungsbeispiels eines Zweistellungs-Okulars in den beiden Vergrößerungsstellungen.

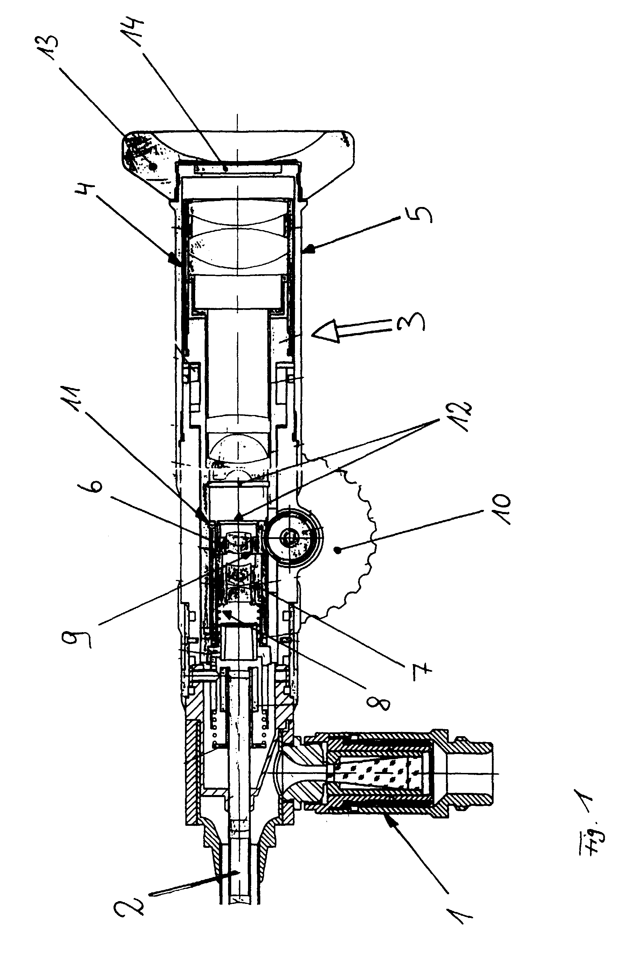

Figur 1 zeigt den proximalen Teil eines Ausführungsbeispiels eines erfindungsgemäßen Endoskops. Das Endoskop weist in an sich bekannter weise einen Lichtleiteranschluß 1 auf, durch den Licht von einer nicht dargestellten Beleuchtungslichtquelle zum ebenfalls nicht dargestellten distalen Ende des Endoskops geleitet wird.

Das von diesem Licht beleuchtete Objektfeld wird von einem am distalen Ende angebrachten Endoskopobjektiv (ebenfalls nicht dargestellt) abgebildet und durch einen Bildweiterleiter 2 zum proximalen Ende übertragen. Der Bildweiterleiter 2 kann - wie bei dem gezeigten Ausführungsbeispiel - aus einem Stablinsen aufweisenden Relaislinsen-System oder aus einem Faserbündel oder einem Gradienten-Linsensystem bestehen.

Das zum proximalen Ende übertragene (reelle) Bild wird mittels einer Okularoptik 3 betrachtet oder mit einer am Okulartrichter 13 angeflanschten Videokamera abgebildet.

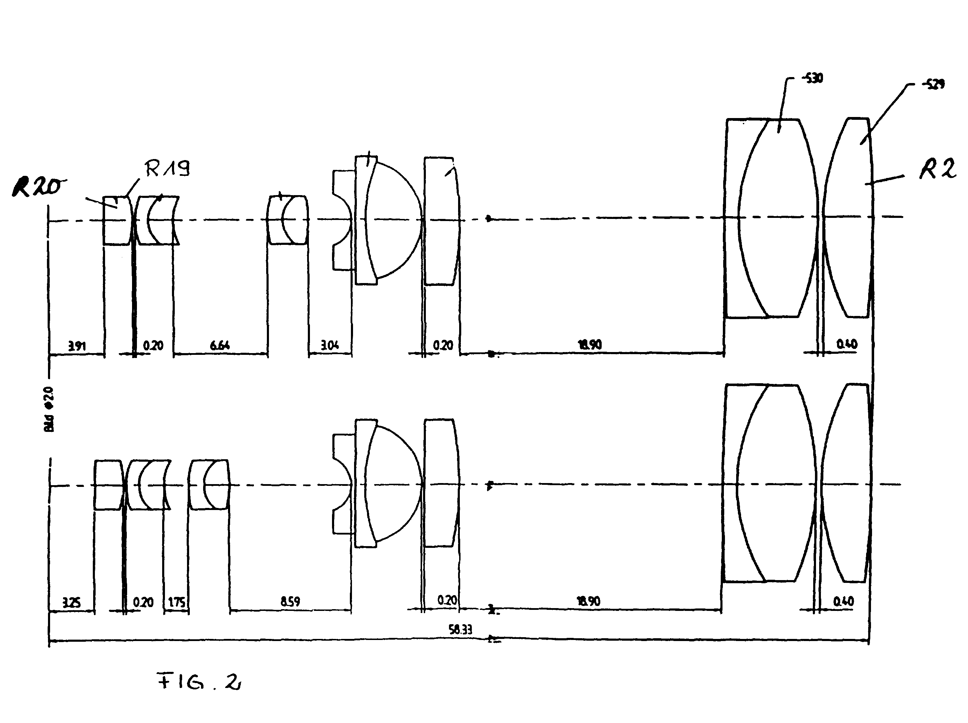

Das Linsensystem 3 des Zweistellungs-Okulars ist in Figur 2 näher dargestellt ist, In der nachfolgenden Tabelle sind die Radien R2 bis R20, die Luftabstände bzw. Linsendicken sowie die Materialien für ein Ausführungsbeispiel der Erfindung und für die eine der beiden Vergrößerungsstellungen angegeben. Die Luftabstände für die zweite Vergrößerungsstellung sind dem unteren Teilbild der Figur 2 zu entnehmen. Die Fläche R1 ist die eine der beiden Flächen des Deckglases des Okulars.

In der einen Stellung des Zweistellungs-Okulars ist die Vergrößerung 30-fach und in der anderen Stellung 80-fach.

| Fläche Nr. | Radius | Luftabstand/Dicke | Material |
|---|---|---|---|
| 1 | plan | | |
| | | 11.67 | Luft |
| 2 | 62.64 | | |
| | | 3.50 | SK5 |
| 3 | - 15.18 | | |
| | | 0.40 | Luft |
| 4 | 17.53 | | |
| | | 5.50 | SK16 |
| 5 | - 12.32 | | |
| | | 1.00 | SFL6 |
| 6 | -145.38 | | |
| | | 8.57 | Luft |
| 7 | plan | | |
| | | 10.33 | Luft |
| 8 | 20.54 | | |
| | | 2.50 | S-SFL56 |
| 9 | plan | | |
| | | 0.20 | Luft |
| 10 | 4.22 | | |
| | | 4.00 | S-SF5 |
| 11 | - 11.63 | | |
| | | 1.00 | S-SFL56 |
| 12 | 1.94 | | |
| | | 3.0391 | Luft |
| 13 | 7.29 | | |
| | | 1.80 | S-LAF3 |
| 14 | - 2.05 | | |
| | | 1.10 | S-SF10 |
| 15 | - 5.87 | | |
| | | 6.64 | Luft |
| 16 | - 3.50 | | |
| | | 1.75 | S-BAK4 |
| 17 | - 2.05 | | |
| | | 0.90 | S-SFL56 |
| 18 | - 4.47 | | |
| | | 0.20 | Luft |
| 19 | 5.46 | | |
| | | 2.00 | S-SF10 |
| 20 | Plan | | |
| | | 3.91 | Luft |

Die Bezeichnungen für die Gläser entsprechen der von Schott, Mainz, Deutschland gewählten Bezeichnung.

Wie Figur 2 zu entnehmen ist, werden bei dem dargestellten Ausführungsbeispiel der Erfindung zwei Linsengruppen zur Einstellung der Vergrößerung verschoben. Die beiden verschobenen Linsengruppen sind die beiden dem distalen Ende zugewandten Linsengruppen, deren Durchmesser vergleichsweise klein ist, so daß der Verschiebemechanismus für die Vergrößerungseinstellung kompakt und leicht sein kann.

Der Mechanismus wird im folgenden unter Bezugnahme auf Figur 1 näher eläutert:

Zur Realisierung der genannten Verschiebungen sind die feststehenden Linsen des Okulars in einem ersten Tubus 4 gehalten, der verschiebbar in einem Außenrohr 5 des Okularteils des Endoskops angebracht ist. In dem ersten Tubus 4 sind ein zweiter Tubus 6 und ein dritter Tubus 7 verschiebbar gehalten. Der dritte Tubus 7 ist durch eine Feder 8 in Richtung auf den zweiten Tubus 6 vorgespannt, wobei ein Anschlag 9 den Verschiebeweg des dritten Tubus begrenzt.

Zur Einstellung der Vergrößerung und der Fokussierung ist ein einziges Einstellrad 10 vorgesehen, das an dem zweiten Tubus 6 angreift und diesen bei einer Drehung verschiebt. Der zweite Tubus 6 ist in den beiden Vergrößerungs-Stellungen durch eine Rastung in dem ersten Tubus 4 festgelegt. Die Rastung wird durch eine federbelastete Kugel 11 hergestellt, die je nach eingestellter Vergrößerung in eine von zwei Nuten 12 in dem ersten Tubus eingreifen kann.

Durch die Drehung des Einstellrades 10 werden damit zunächst der erste und der zweite Tubus gemeinsam verschoben. Da der Verschiebeweg des ersten Tubus beidseits durch Anschläge begrenzt ist, wird bei einer weiteren Drehung des Einstellrades der zweite Tubus aus der einen Vergrößerungs-Stellung in die andere Vergrößerungsstellung überführt. Der dritte Tubus folgt der Bewegung des zweiten Tubus aufgrund der Vorspannung durch die Feder, wobei ein Anschlag den Verschiebeweg des dritten Tubus begrenzt.

Zur Abdichtung des Endoskops ist in dem Okulartrichter 13 ein Deckglas 14 vorgesehen, das in die optische Berechnung des Okulars mit einbezogen ist.

Im übrigen wird auf die Zeichnung zur Erläuterung aller hier nicht im einzelnen dargestellten Einzelheiten ausdrücklich Bezug genommen.

## Patentansprüche

1. Endoskop mit
- einem am distalen Ende angebrachten Endoskopobjektiv,
- einem Bildweiterleiter (2), der das Bild des Endoskopobjektivs zum proximalen Ende überträgt, und
- einem aus mehreren Gruppen bestehenden ZweistellungsOkular (3), durch das das vom Bildweiterleiter übertragene Bild betrachtet wird, und das
- eine Einstellung der Vergrößerung des erzeugten Okularbildes durch Verschieben einer Linsengruppe, und
- eine Fokussierung durch Verschieben aller Linsengruppen des Okulars
erlaubt,
wobei die zur Einstellung der Vergrößerung nicht verschobenen Linsen des Okulars in einem ersten Tubus (4) gehalten sind, in dem ein weiterer Tubus (6) verschiebbar geführt ist, in dem die zur Einstellung der Vergrößerung verschobene Linsengruppe gehalten ist, der in den beiden Vergrößerungs-Stellungen durch eine Rastung (11,12) in dem ersten Tubus festgelegt ist, und
zur Einstellung der Vergrößerung und der Fokussierung ein einziges Einstellrad (10) vorgesehen ist, das an dem weiteren Tubus angreift (6), so daß bei einer Drehung des Einstellrades zunächst der erste und der weitere Tubus gemeinsam verschoben werden, und
der Verschiebeweg des ersten Tubus beidseits durch jeweils einen Anschlag begrenzt ist, so daß bei weiterer Drehung des Einstellrades der weitere Tubus aus der einen Vergrößerungs-Stellung in die andere Vergrößerungs-Stellung überführt wird.

2. Endoskop nach Anspruch 1, wobei eine federbelastete Kugel (11), die in eine von zwei Nuten (12) in dem ersten Tubus eingreift, die Rastung erzeugt.

3. Endoskop nach Anspruch 1 oder 2, wobei das Einstellrad (10) an dem weiteren Tubus (6) über eine Schnecken/Zahnrad- oder eine Zahnstangen/Zahnrad-Verbindung angreift.

4. Endoskop nach einem der Ansprüche 1 bis 3, wobei zur Einstellung der Vergrößerung zwei Linsengruppen verschiebbar sind.

5. Endoskop nach Anspruch 4, wobei
eine der beiden Linsengruppen in dem weiteren (zweiten) Tubus (6) und die andere in einem dritten Tubus (7) gehalten ist,
daß der dritte Tubus (7) durch eine Feder in Richtung auf den zweiten Tubus (6) vorgespannt ist, und
daß ein Anschlag (9) den Verschiebeweg des dritten Tubus begrenzt.

6. Endoskop nach einem der Ansprüche 1 bis 5, wobei im Okulartrichter (13) ein Deckglas (14) vorgesehen ist.

7. Endoskop nach einem der Ansprüche 1 bis 6, mit folgenden Daten des optischen Systems des Okulars in der einen Vergrößerungseinstellung:
| Fläche Nr. | Radius | Luftabstand/Dicke | Material |
|---|---|---|---|
| 1 | plan | | |
| | | 11.67 | Luft |
| 2 | 62.64 | | |
| | | 3.50 | SK5 |
| 3 | - 15.18 | | |
| | | 0.40 | Luft |
| 4 | 17.53 | | |
| | | 5.50 | SK16 |
| 5 | - 12.32 | | |
| | | 1.00 | SFL6 |
| 6 | -145.38 | | |
| | | 8.57 | Luft |
| 7 | plan | | |
| | | 10.33 | Luft |
| 8 | 20.54 | | |
| | | 2.50 | S-SFL56 |
| 9 | plan | | |
| | | 0.20 | Luft |
| 10 | 4.22 | | |
| | | 4.00 | S-SF5 |
| 11 | - 11.63 | | |
| | | 1.00 | S-SFL56 |
| 12 | 1.94 | | |
| | | 3.0391 | Luft |
| 13 | 7.29 | | |
| | | 1.80 | S-LAF3 |
| 14 | - 2.05 | | |
| | | 1.10 | S-SF10 |
| 15 | - 5.87 | | |
| | | 6.64 | Luft |
| 16 | - 3.50 | | |
| | | 1.75 | S-BAK4 |
| 17 | - 2.05 | | |
| | | 0.90 | S-SFL56 |
| 18 | - 4.47 | | |
| | | 0.20 | Luft |
| 19 | 5.46 | | |
| | | 2.00 | S-SF10 |
| 20 | Plan | | |
| | | 3.91 | Luft |

## Claims

1. Endoscope having
- an endoscope objective lens attached to its distal end,
- an image relay (2) which transmits the image of the endoscope objective lens to the proximal end, and
- a two-position multi-group eyepiece (3) through which said image transmitted by said image relay is observed, and which permits
- adjusting the magnification of the generated eyepiece image by moving at least one lens group and
- focusing by moving all the lens groups of said eyepiece,
wherein the lenses of said eyepiece not moved for adjusting the magnification being contained in a first tube (4) in which at least one other tube (6) containing said lens group moved for adjusting said magnification is conveyed in a moveable manner, said other tube being fixed in said two magnification positions by a lock-in means (11, 12) in said first tube, and
a single adjusting wheel (10) being provided for adjusting the magnification and focusing, said adjusting wheel acting on said other tube (6) in such a manner that when said adjusting wheel is rotated, first said first and said other tube are moved jointly and the movement path of said first tube being limited on both sides by a stop respectively in such a manner that when said adjusting wheel is rotated again, said other tube is conveyed from one magnification position to the other magnification position.

2. An endoscope according to claim 1,
wherein that spring-biased ball, which engages one of two grooves (12) in said first tube, generates said lock-in means.

3. An endoscope according to claim 1 or 2,
wherein that said adjusting wheel (10) acts on said other tube via a worm wheel/gear or a toothed rack/gear connection.

4. An endoscope according to one of the claims 1 to 3,
wherein that two groups of lenses are moveable for adjusting the magnification.

5. An endoscope according to claim 4,
wherein that one of said two groups of lenses is contained in said other (second) tube (6) and the other is contained in a third tube (7),
that said third tube (7) is pretensioned by a spring in the direction of said second tube (6), and
that a stop (9) limits said movement path of said third tube.

6. An endoscope according to one of the claims 1 to 5,
wherein that glass cover (14) is provided in the eyepiece funnel (13).

7. An endoscope according to one of the claims 1 to 6,
wherein the following data of the optical system of said eyepiece in one of the two magnification positions:
| Surface No. | Radius | Air space/thickness | Material |
|---|---|---|---|
| 1 | plan | | |
| | | 11.67 | air |
| 2 | 62.64 | | |
| | | 3.50 | SK5 |
| 3 | - 15.18 | | |
| | | 0.40 | air |
| 4 | 17.53 | | |
| | | 5.50 | SK16 |
| 5 | - 12.32 | | |
| | | 1.00 | SFL6 |
| 6 | - 145.38 | | |
| | | 8.57 | air |
| 7 | plan | | |
| | | 10.33 | air |
| 8 | 20.54 | | |
| | | 2.50 | S-SFL56 |
| 9 | plan | | |
| | | 0.20 | air |
| 10 | 4.22 | | |
| | | 4.00 | S-SF5 |
| 11 | -11.63 | | |
| | | 1.00 | S-SFL56 |
| 12 | 1.94 | | |
| | | 3.391 | air |
| 13 | 7.29 | | |
| | | 1.80 | S-LAF3 |
| 14 | - 2.05 | | |
| | | 1.10 | S-SF10 |
| 15 | - 5.87 | | |
| | | 6.64 | air |
| 16 | - 3.50 | | |
| | | 1.75 | S-BAK4 |
| 17 | - 2.05 | | |
| | | 0.90 | S-SFL56 |
| 18 | - 4.47 | | |
| | | 0.20 | air |
| 19 | 5.46 | | |
| | | 2.00 | S-SF10 |
| 20 | plan | | |
| | | 3.91 | air |

## Revendications

1. Endoscope comprenant
- un objectif endoscopique installé à l'extrémité distale,
- un transmetteur d'images (2), transmettant l'image de l'objectif endoscopique à l'extrémité proximale, et
- un oculaire (3) à deux positions, composé de plusieurs groupes, par l'intermédiaire duquel l'image transmise par le transmetteur d'images est observée, et qui autorise
- un réglage du grossissement de l'image d'oculaire engendrée, par coulissement d'un groupe de lentilles, et
- une focalisation par coulissement de tous les groupes de lentilles de l'oculaire,
dans lequel les lentilles de l'oculaire, qui ne sont pas animées de coulissements en vue du réglage du grossissement, sont retenues dans un premier tube (4) dans lequel est guidé, à coulissement, un tube supplémentaire (6) dans lequel est retenu le groupe de lentilles animé de coulissements en vue du réglage du grossissement, et qui est consigné à demeure dans le premier tube, dans les deux positions de grossissement, par l'intermédiaire d'un système (11, 12) à déclic, et
pour régler le grossissement et la focalisation, il est prévu une unique roue de réglage (10) venant en prise avec le tube supplémentaire (6) de façon telle que, lors d'une rotation de la roue de réglage, le premier tube et le tube supplémentaire soient tout d'abord animés d'un coulissement conjoint, et
le trajet de coulissement du premier tube est limité, de part et d'autre, par une butée respective, si bien que, lors d'une poursuite de la rotation de la roue de réglage, le tube supplémentaire est transféré de l'une des positions de grossissement à l'autre position de grossissement.

2. Endoscope selon la revendication 1, dans lequel
une bille (11) chargée élastiquement, pénétrant dans l'une de deux encoches (12) pratiquées dans le premier tube, provoque l'effet d'encliquetage.

3. Endoscope selon la revendication 1 ou 2, dans lequel
la roue de réglage (10) vient en prise avec le tube supplémentaire (6) par l'intermédiaire d'une liaison à vis sans fin/roue dentée ou à crémaillère/roue dentée.

4. Endoscope selon l'une des revendications 1 à 3, dans lequel
deux groupes de lentilles peuvent être animés de coulissements en vue du réglage du grossissement.

5. Endoscope selon la revendication 4, dans lequel
l'un des deux groupes de lentilles est retenu dans le tube supplémentaire (deuxième tube) (6), et l'autre est retenu dans un troisième tube (7),
le troisième tube (7) est précontraint par un ressort en direction du deuxième tube (6), et
une butée (9) limite le trajet de coulissement du troisième tube.

6. Endoscope selon l'une des revendications 1 à 5, dans lequel
un verre de recouvrement (14) est prévu dans le cône (13) de l'oculaire.

7. Endoscope selon l'une des revendications 1 à 6, présentant,
dans l'un des réglages du grossissement, les données suivantes concernant le système optique de l'oculaire :
| N° de surface | Rayon | Espacement/épaisseur | Matériau |
|---|---|---|---|
| 1 | plan | | |
| | | 11,67 | Air |
| 2 | 62,64 | | |
| | | 3,50 | SK5 |
| 3 | - 15,18 | | |
| | | 0,40 | Air |
| 4 | 17,53 | | |
| | | 5,50 | SK16 |
| 5 | - 12,32 | | |
| | | 1,00 | SFL6 |
| 6 | - 145,38 | | |
| | | 8,57 | Air |
| 7 | plan | | |
| | | 10,33 | Air |
| 8 | 20,54 | | |
| | | 2,50 | S-SFL56 |
| 9 | plan | | |
| | | 0,20 | Air |
| 10 | 4,22 | | |
| | | 4,00 | S-SF5 |
| 11 | - 11,63 | | |
| | | 1,00 | S-SFL56 |
| 12 | 1,94 | | |
| | | 3,0391 | Air |
| 13 | 7,29 | | |
| | | 1,80 | S-LAF3 |
| 14 | - 2,05 | | |
| | | 1,10 | S-SF10 |
| 15 | - 5,87 | | |
| | | 6,64 | Air |
| 16 | - 3,50 | | |
| | | 1,75 | S-BAK4 |
| 17 | - 2,05 | | |
| | | 0,90 | S-SFL56 |
| 18 | - 4,47 | | |
| | | 0,20 | Air |
| 19 | 5,46 | | |
| | | 2,00 | S-SF10 |
| 20 | plan | | |
| | | 3,91 | Air |
